# EUROPÄISCHE PATENTANMELDUNG

(11) **EP 1 264 863 A1**
(43) Veröffentlichungstag der Anmeldung: **11.12.2002**
(21) Anmeldenummer: 01114061.3
(22) Anmeldetag: 08.06.2001
(51) Int. Cl.: C08L 83/04, D06M 15/643

(54) **Zusammensetzungen mit Polysiloxanen und weiteren Polymeren**

(71) Anmelder: Ciba Spezialitätenchemie Pfersee GmbH, 86462 Langweid a.L. (DE)
(72) Erfinder: Chrobaczek, Harald, Dr., 86153 Augsburg (DE); Goretzki, Ralf, Dr., 86391 Stadtbergen (DE)

(57) **Zusammenfassung**

Es werden wäßrige Dispersionen beansprucht, welche Polyorganosiloxane mit längeren Alkylgruppen und mit aromatischen Gruppen und ferner Polymere mit Perfluoralkylgruppen oder fluorfreie Polyurethane enthalten. Die Dispersionen eignen sich für die Behandlung von textilen Flächengebilden.

## Beschreibung

Die Erfindung betrifft Zusammensetzungen, insbesondere in Form von wäßrigen Dispersionen. Diese enthalten ein Polyorganosiloxan, welches in Seitenketten Alkylgruppen und aromatische Gruppen aufweist. Sie enthalten außerdem ein Fluorpolymer oder ein Polyurethan. Die Erfindung betrifft ferner die Verwendung dieser Dispersionen zur Behandlung von Fasermaterialien.

Es ist bekannt, Fasermaterialien, wie z.B. textile Flächengebilde, im Rahmen der Textilausrüstung bzw. Textilveredlung mit wäßrigen Dispersionen von Polyorganosiloxanen zu behandeln. Den Textilien können hierdurch angenehm weicher Griff und/oder wasserabweisende Eigenschaften verliehen werden.

Es sind bereits Polysiloxane bekannt, welche Alkylgruppen und aromatische Gruppen enthalten. Dies ist beispielsweise in der EP-B 636 155 beschrieben. Die dort genannten Polysiloxane sind zur Herstellung von Kontaktlinsen geeignet und enthalten an beiden Kettenenden ungesättigte Kohlenwasserstoffreste. Für die Behandlung von textilen Fasermaterialien sind solche Polysiloxane in einer Reihe von Fällen wegen der Reaktivität der Kohlenstoff-Kohlenstoff-Mehrfachbindungen ungeeignet.

Es ist ferner bekannt, Textilien mit wäßrigen Dispersionen zu behandeln, welche Polyorganosiloxane und Polymere enthalten, die Perfluoralkylgruppen (R_{F}) aufweisen. Durch die R_{F} enthaltenden Polymeren können den textilen Flächengebilden ölabweisende Eigenschaften verliehen werden. So beschreibt z.B. die US 4 004 059 Polyorganosiloxane, welche in Kombination mit Fluoratome enthaltenden Polymeren für die Behandlung textiler Flächengebilde geeignet sind. Die dort genannten Polysiloxane enthalten längerkettige Alkylgruppen, aber keine aromatischen Gruppen. Der Nachteil dieser Polysiloxane besteht darin, daß es in einer Reihe von Fällen schwierig oder unmöglich ist, stabile wäßrige Dispersionen zu erhalten, welche diese Polysiloxane und ggf. Fluorpolymere enthalten. Dies macht sich in der Regel umso stärker bemerkbar, je länger die Alkylkette ist, die als Seitenkette der Polysiloxankette vorliegt.

Aus der WO 99/52965 sind Polysiloxane bekannt, die aromatische Gruppen enthalten, welche über Alkylenbrücken an Siliciumatome gebunden sind. Sie werden für Zusammensetzungen auf dem Kosmetik- oder Parfümsektor verwendet. Sie können neben den erwähnten Aralkylgruppen noch Alkylgruppen einer Kettenlänge bis zu 8 Kohlenstoffatomen enthalten. Die Verwendung der beschriebenen Polyorganosiloxane für die Behandlung von Fasermaterialien und Zusammensetzungen, welche außer den Polysiloxanen noch ein R_{F} enthaltendes Polymer oder ein Polyurethan enthalten, werden in dieser Schrift nicht beschrieben.

Die US 4 625 010 beschreibt Polysiloxane, welche zusammen mit fluorhaltigen Polymeren für die Behandlung von Textilien geeignet sind. Die Polysiloxane enthalten neben Alkyl- und Arylgruppen noch Epoxideinheiten. Der Nachteil dieser Polysiloxane besteht in der Anwesenheit von Epoxideinheiten, welche wegen ihrer Reaktivität in vielen Fällen für Textilausrüstung unerwünscht ist. Daneben müssen bei ihrer Herstellung Epoxidgruppen enthaltende Ausgangsstoffe verwendet werden, was wegen der Handhabung von Epoxidverbindungen einen Nachteil darstellt.

Der vorliegenden Erfindung lag die Aufgabe zugrunde, eine Zusammensetzung zur Verfügung zu stellen, welche die oben genannten Nachteile nicht aufweist und die sich in Form wäßriger Dispersionen ausgezeichnet zur Behandlung von Fasermaterialien, insbesondere textilen Flächengebilden eignet.

Die Aufgabe wurde gelöst durch eine Zusammensetzung, welche folgende Komponenten enthält
A) einen Dispergator oder ein Gemisch von Dispergatoren
B) ein unverzweigtes Polyorganosiloxan, welches keine Epoxygruppen und keine olefinischen Kohlenstoff-Kohlenstoff-Doppelbindungen und keine Kohlenstoff-Kohlenstoff-Dreifachbindungen enthält, wobei beide Endgruppen der Polysiloxankette durch Einheiten der Formel

   R₃Si-O-

   gebildet werden und wobei das Polysiloxan innerhalb der Kette Einheiten der Formeln (I), (II) und gegebenenfalls der Formel (III) enthält

   -SiRR¹-O- (I)

   -SiRR²-O- (II)

   -SiR₂-O- (III)

   wobei die Einheiten der Formeln (I) bis (III) beliebig über die Kette verteilt sein können, wobei alle Reste R unabhängig voneinander für einen unverzweigten oder verzweigten Alkylrest mit 1 bis 4 Kohlenstoffatomen stehen,
   alle Reste R¹ unabhängig voneinander für einen unverzweigten oder verzweigten Alkylrest mit 6 bis 24 Kohlenstoffatomen stehen,
   alle Reste R² unabhängig voneinander für einen Rest der Formel (IV) stehen

   -R³-Ph, (IV)

   wobei R³ für einen zweiwertigen unverzweigten oder verzweigten Alkylenrest mit 2 bis 6 Kohlenstoffatomen steht und Ph für einen unsubstituierten Phenylrest steht oder für einen Phenylrest, der eine oder mehrere unverzweigte oder verzweigte Alkylgruppen mit 1 bis 4 Kohlenstoffatomen als Substituenten aufweist,
C) ein Polymer, das ausgewählt ist aus Polymeren, welche Perfluoralkylgruppen (R_{F}) aufweisen (Komponente C1) und fluorfreien Polyurethanen (Komponente C2).

Erfindungsgemäße Zusammensetzung können gegebenenfalls in Form einer Dispersion oder Lösung in einem organischen Lösungsmittel vorliegen und z.B. für eine sog. "Lösungsmittelbeschichtung" von Textilien verwendet werden, wobei sie zusätzlich übliche Zusätze enthalten, wie sie aus der Technologie der Lösungsmittelbeschichtung bekannt sind.
Eine bevorzugte Ausführungsform besteht jedoch darin, daß sie in Form wäßriger Dispersionen vorliegen und als solche zum Einsatz kommen. Aus diesem Grund beziehen sich die nachfolgenden Aussagen auf erfindungsgemäße Zusammensetzungen in Form wäßriger Dispersionen.

Erfindungsgemäße Dispersionen besitzen folgende Vorteile:
a) Sie können nach allgemein üblichen Methoden unter Verwendung bekannter Dispergatoren in Form sehr stabiler wäßriger Dispersionen hergestellt werden, die sich ausgezeichnet zur Behandlung textiler Flächengebilde eignen, insbesondere von Geweben und Maschenware.
b) Sie verleihen textilen Fasermaterialien angenehm weichen Griff und wasserabweisende Eigenschaften.
c) Sie sind in Form stabiler wäßriger Dispersionen, welche eine Komponente C1), d.h. ein oder mehrere Polymere mit Perfluoralkylgruppen (R_{F}) enthalten, gut geeignet für die Behandlung textiler Fasermaterialien, denen hierdurch weicher Griff sowie öl- und wasserabweisende Eigenschaften verliehen werden können.
d) Sie sind, wenn sie ein oder mehrere fluorfreie Polyurethane (Komponente C2)) enthalten, für die Beschichtung textiler Fasermaterialien geeignet, wobei die Dispersionen im Normalfall zusätzlich Verdicker enthalten und vorzugsweise in Form von hochviskosen Flüssigkeiten oder Pasten eingesetzt werden.

Vorzugsweise enthalten erfindungsgemäße Dispersionen als Komponente C) nur eine oder mehrere der Komponenten C1), d.h. ein oder mehrere Polymere, welche unter die Definition von C1) fallen, aber keine Komponente C2), oder sie enthalten nur eine oder mehrere der Komponenten C2), aber keine Komponente C1). Im ersteren Fall eignen sie sich gut für die öl- und wasserabweisende Ausrüstung von textilen Flächengebilden, z.B. in Form einer Foulard-Applikation. Den Textilien wird hierdurch zusätzlich ein angenehm weicher Griff vermittelt. Im zweiten Fall sind die Dispersionen vor allem gut für die Beschichtung textiler Flächengebilde geeignet und enthalten vorzugsweise weitere Bestandteile wie z.B. Verdicker.

Es hat sich gezeigt, daß die als Komponente B) geeigneten Polyorganosiloxane zu den genannten Vorteilen dann in ausgeprägtem Ausmaß führen, wenn sie neben längerkettigen Alkylgruppen (R¹) auch aromatische Gruppen (R²) in Seitenketten der Polysiloxankette enthalten. Bei Abwesenheit einer aromatischen Gruppe in Komponente B) ist die Herstellung stabiler wäßriger Dispersionen häufig schwierig bis unmöglich, insbesondere bei steigender Anzahl der C-Atome im Rest R¹. Die Abwesenheit von Resten R¹ führt zu nicht optimal weichem Griff und vielfach zu nicht optimalen wasserabweisenden Eigenschaften ausgerüsteter Textilien.

Die als Komponente B) erfindungsgemäßer Dispersionen verwendeten Polyorganosiloxane sind unverzweigt. Dies bedeutet, daß die Polyorganosiloxankette zwar Seitenketten aufweist (R¹ und R²), jedoch keine Seitenketten, welche Siliciumatome enthalten.

Die Polyorganosiloxane (Komponente B) enthalten keine Epoxygruppen, keine olefinischen Kohlenstoff-Kohlenstoff-Doppelbindungen und keine Kohlenstoff-Kohlenstoff-Dreifachbindungen. Die Anwesenheit solcher reaktiver Gruppen würde die Verwendbarkeit für eine Reihe von Anwendungszwecken beeinträchtigen. Ferner enthalten aus dem gleichen Grund die Polyorganosiloxane vorzugsweise keine Si-H-Bindungen mit Ausnahme geringer Anteile, welche von ihrer Synthese herrühren können (zu der vorzugsweise Siloxane mit Si-H-Bindungen als Ausgangsstoffe eingesetzt werden). Die Anwesenheit von Polyoxyethylengruppen in den Polyorganosiloxanen ist ebenfalls weniger bevorzugt, weil hierdurch die wasserabweisenden Eigenschaften ausgerüsteter Textilien beeinträchtigt werden können. Die in erfindungsgemäßen Zusammensetzungen enthaltenen Polyorganosiloxane können jedoch noch kleinere Anteile an Si-OH-Bindungen enthalten, die in Form von Nebenprodukten vorliegen, welche bei der Synthese entstehen.

Die als Komponente B) erfindungsgemäßer Dispersionen verwendeten Polyorganosiloxane weisen an beiden Kettenenden je eine Einheit der Formel

R₃ Si-O-

auf. Alle Reste R stehen hierbei unabhängig voneinander für einen verzweigten oder unverzweigten Alkylrest mit 1 bis 4 Kohlenstoffatomen. Bevorzugt sind alle Reste R Methylgruppen. Diese Definition für R und für die bevorzugte Ausführungsform, wonach alle Reste R Methylgruppen sind, gilt auch für die unten beschriebenen Einheiten der Formeln (I), (II) und (III).

Innerhalb der Polysiloxankette von Komponente B) liegen Einheiten der Formel (I), der Formel (II) und gegebenenfalls zusätzlich der Formel (III) vor. Diese einzelnen Einheiten können beliebig über die Polysiloxankette verteilt sein.
In den Einheiten der Formeln (I) und (II) liegen die Reste R¹ bzw. R² als Seitenketten der Polysiloxankette vor.
Alle Reste R¹ stehen unabhängig voneinander für einen unverzweigten oder verzweigten Alkylrest mit 6 bis 24 Kohlenstoffatomen. Vorzugsweise sind alle Reste R¹ unverzweigte Alkylreste mit 10 bis 18 Kohlenstoffatomen.
Alle Reste R² stehen unabhängig voneinander jeweils für einen Rest der Formel (IV)

-R³-Ph (IV)

Hierin ist R³ ein zweiwertiger unverzweigter oder verzweigter Alkylenrest mit 2 bis 6 Kohlenstoffatomen und Ph steht entweder für den unverzweigten Phenylrest oder für einen Phenylrest, der eine oder mehrere unverzweigte oder verzweigte Alkylgruppen mit 1 bis 4 Kohlenstoffatomen als Substituenten am aromatischen Ring aufweist. Vorzugsweise stehen alle Reste R² für

-CH₂-CHR⁴-Ph

wobei R⁴ Wasserstoff oder eine Methylgruppe und Ph der unsubstituierte Phenylrest ist.

Bevorzugte erfindungsgemäße Dispersionen sind dadurch gekennzeichnet, daß in Komponente B) die Anzahl der Einheiten der Formel (II) 4 bis 30 % der Anzahl der Einheiten der Formel (I) und die Anzahl der Einheiten der Formel (III) 0 bis 5000 %, vorzugsweise 0 bis 1000 %, der Anzahl der Einheiten der Formel (I) beträgt.

Die Anzahlen der einzelnen Einheiten lassen sich durch die Mengen der eingesetzten Ausgangsverbindungen bei der Synthese der Polysiloxane steuern. Eine geeignete Synthesemethode wird unten beschrieben.

Eine weitere bevorzugte Ausführungsform erfindungsgemäßer Dispersionen ist dadurch gekennzeichnet, daß Komponente B) 20 bis 1000, vorzugsweise 20 bis 100, Siliciumatome enthält.

Die Herstellung von als Komponente B) geeigneten Polysiloxanen kann nach folgender Methode erfolgen:
Man verwendet als Ausgangsstoff ein Polysiloxan, welches an beiden Kettenenden jeweils Reste der Formel R₃Si-O- aufweist und das in der Kette nur Einheiten der Formel

-Si(R)H-O-

und gegebenenfalls der Formel

-SiR₂-O-

enthält. Solche Polysiloxane (H-Siloxane) sind auf dem Markt erhältlich; ein Beispiel ist das Produkt "Finish WS 61 M" (Fa. Wacker, DE) oder das Produkt "HMS 301" (Fa. ABCR GmbH, DE). Zur Herstellung erfindungsgemäßer Polyorganosiloxane wird das genannte H-Siloxan sowohl mit einem Monoolefin mit 6 bis 24 Kohlenstoffatomen als auch mit einer aromatischen Verbindung umgesetzt. Die C=C-Doppelbindung des C₆-C₂₄-Monoolefins kann endständig oder innerhalb der Kohlenwasserstoffkette sein, vorzugsweise ist sie endständig. Die aromatische Verbindung enthält einen Benzolkern, der mindestens einen Substituenten aufweist. Dieser Substituent ist ein linearer oder verzweigter Kohlenwasserstoffrest mit 2 bis 6 Kohlenstoffatomen, der eine C=C-Doppelbindung enthält. Daneben kann die aromatische Verbindung noch eine oder mehrere lineare oder verzweigte Alkylgruppen mit 1 bis 4 Kohlenstoffatomen als Substituenten am Benzolkern aufweisen.

Besonders gut geeignet zur Herstellung von Polysiloxanen gemäß o.a. Verfahren sind Monoolefine mit 10 bis 18 Kohlenstoffatomen, insbesondere solche mit endständiger olefinischer Doppelbindung. Als Beispiel ist 1-Dodecen zu nennen. Unter den aromatischen Verbindungen sind Styrol und α-Methylstyrol besonders gut geeignet.

Durch geeignete Auswahl von Art und Menge an den genannten Ausgangssubstanzen und durch die Synthesebedingungen gelingt es, die Struktur der entstehenden Polyorganosiloxane gezielt zu beeinflussen, z.B. was die Anzahl der Einheiten der Formeln (I), (II) und (III) und die Gesamtzahl der Si-Atome betrifft.

Bei der genannten Umsetzung kann das H-Siloxan gleichzeitig mit dem Monoolefin und der aromatischen Verbindung umgesetzt werden. Es ist aber auch möglich, das H-Siloxan zuerst mit einer und anschließend mit der anderen dieser Verbindungen umzusetzen. Bei der Umsetzung wird die Si-H-Gruppe an die jeweilige olefinische C=C-Doppelbindung addiert, wodurch die Reste R¹ und R² in den erfindungsgemäßen Polysiloxanen gebildet werden. Vorzugsweise wird die Umsetzung mit solchen Mengen an Ausgangsstoffen und unter solchen Bedingungen durchgeführt, daß das entstehende Produktgemisch Si-H-Bindungen und olefinische Doppelbindungen nicht mehr oder nur noch in einem unwesentlichen Ausmaß enthält.

Die Umsetzung kann unter Bedingungen erfolgen, wie sie aus der H-Siloxanchemie allgemein bekannt sind.

Polysiloxane, welche sich als Komponente B) eignen, sind auch auf dem Markt erhältlich. Ein Beispiel ist das Produkt TEGOPREN 6870 (Fa. Goldschmidt, DE).

Komponente B) erfindungsgemäßer Dispersionen kann neben Einheiten der Formel (I), (II) sowie gegebenenfalls (III) noch zusätzlich Aminogruppen enthaltende Reste aufweisen, insbesondere an je ein Si-Atom gebundene Reste der Formel 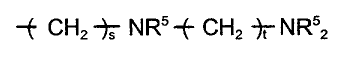 worin s für eine Zahl von 2 bis 6, vorzugsweise 3, t für eine Zahl von 2 bis 6, vorzugsweise für 2 steht und alle Reste R⁵ unabhängig voneinander für Wasserstoff oder eine Alkylgruppe mit 1 bis 4 Kohlenstoffatomen stehen. Die Einführung solcher Reste in Komponente B) gelingt dadurch, daß man bei der oben beschriebenen Synthese das H-Siloxan nicht nur mit einem Olefin und einer aromatischen Verbindung umsetzt, sondern zusätzlich mit einem ungesättigten aliphatischen Amin, z.B. Allylamin oder N-(2-Aminoethyl)-allylamin. Die Umsetzung mit dem Allylamin kann gleichzeitig mit der Umsetzung mit Olefin und aromatischer Verbindung erfolgen oder vorher oder hinterher.

Vorzugsweise ist Komponente A) (Dispergator oder Dispergatorgemisch) erfindungsgemäßer Dispersionen ausschließlich aus nichtionischen oberflächenaktiven Verbindungen ausgewählt. Geeignete Dispergatoren sind dem Fachmann auf dem Gebiet der Silikonemulsionen bekannt und auf dem Markt erhältlich. Hierzu sind insbesondere ethoxilierte Fettalkohole oder ethoxilierte Fettsäuren zu nennen, z.B. solche mit 8 bis 18 Kohlenstoffatomen im Alkylrest, der linear oder verzweigt sein kann, und mit 6 bis 20 Polyoxyethyleneinheiten. Diese Ethoxilate können an einem Kettenende jeweils eine OH-Gruppe oder eine OR-Gruppe aufweisen, wobei R für einen Alkylrest mit 1 bis 4 C-Atomen, insbesondere für CH₃ steht.

Gegebenenfalls können erfindungsgemäße Dispersionen hergestellt werden, indem man eine wäßrige Dispersion einer Komponente B) mit einer wäßrigen Dispersion einer Komponente C1) oder einer Komponente C2) vermischt, wobei mindestens eine dieser Dispersionen bereits Komponente A) enthält. Da auf dem Markt erhältliche Dispersionen einer Komponente C1) oder einer Komponente C2) ionogene, z.B. kationische Dispergatoren enthalten können, sind bei deren Verwendung in den erhaltenen erfindungsgemäßen Dispersionen natürlich auch ionische Dispergatoren enthalten.

Erfindungsgemäße Dispersionen enthalten neben den bereits beschriebenen Komponenten A) und B) noch eine Komponente C). Komponente C) kann ein Polymer oder ein Gemisch von Polymeren sein, welches Perfluoralkylgruppen (R_{F}) enthält; solche Polymere werden nachfolgend als Komponente C1) bezeichnet. Sie kann auch ein fluorfreies Polyurethan oder ein Gemisch solcher Polyurethane sein, das nachfolgend als Komponente C2) bezeichnet wird. Vorzugsweise enthalten erfindungsgemäße Dispersionen als Komponente C) entweder nur Polymere, welche unter die Definition von C1) fallen und werden vorzugsweise für die Foulardausrüstung von textilen Flächengebilden verwendet; oder aber sie enthalten als Komponente C) nur Polyurethane gemäß der Definition von C2) und werden vorzugsweise für die Beschichtung von textilen Flächengebilden verwendet. Die textilen Flächengebilde liegen in beiden Fällen bevorzugt als Gewebe oder Maschenware vor.

Vorzugsweise enthalten erfindungsgemäße Dispersionen 0,5 bis 10 Gew% Komponente A), 0,5 bis 30 Gew% Komponente B), 3 bis 30 Gew% Komponente C) und 30 bis 96 Gew% Wasser.

Komponente C1) ist vorzugsweise ein Polyester mit R_{F}-Gruppen, ein Polyurethan mit R_{F}-Gruppen, ein Polyacrylat mit R_{F}-Gruppen oder ein Gemisch solcher R_{F} enthaltender Polymerer. Solche Polymere sind auf dem Markt erhältlich, als Beispiel seien die ZONYL-Typen (Fa.
Du Pont) genannt.
Als Polyacrylate mit R_{F}-Gruppen kommen insbesondere Homopolymere oder Copolymere in Frage, welche sich aus Monomeren der Formel 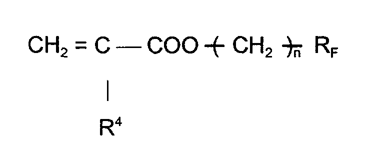 erhalten lassen. R⁴ steht hierbei für H oder CH₃, n für eine Zahl von 2 bis 6 und R_{F} für einen Perfluoroalkylrest der Formel 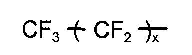 wobei x eine Zahl von 5 bis 19 ist. Normalerweise wird hierbei ein Gemisch von Acrylaten dieser Formel eingesetzt, dessen einzelne Verbindungen sich in der Kettenlänge von R_{F} unterscheiden. Als Komponente C1) gut geeignete Copolymere auf Basis des oben genannten Monomeren lassen sich durch Copolymerisation dieses Monomeren mit einem oder mehreren der folgenden Monomeren erhalten. Vinylchlorid, Vinylidenchlorid, Butylacrylat, Butylmethacrylat, Stearyl(meth)acrylat.
Geeignete R_{F}-enthaltende Polyacrylate sind ferner in der US 4 742 140 beschrieben.
Als Komponente C1) gut geeignete Polyurethane mit R_{F}-Gruppen lassen sich ausgehend von Diolen, welche eine oder mehrere R_{F}-Gruppen enthalten, durch Umsetzung mit Diisocyanaten erhalten. Hierbei können fluorfreie Diole als Kettenverlängerer zusätzlich mitverwendet werden, z.B. N-Methyl-diethanolamin oder Polyglykole. Ein besonders gut geeignetes, R_{F}-Gruppen enthaltendes Diol ist ein Produkt der Formel 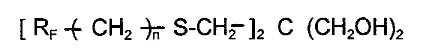 wobei R_{F} die oben genannte Bedeutung besitzt und n eine Zahl von 2 bis 6 ist. Normalerweise wird hierbei ein Gemisch von Diolen dieser Formel eingesetzt, dessen einzelne Verbindungen sich in der Kettenlänge von R_{F} unterscheiden. Diese Diole und ihre Herstellung sowie die Herstellung der R_{F}-Polyurethane sind in der Literatur beschrieben, z.B. in der EP-A 459 125 und EP-A 348 350. Weitere geeignete R_{F}-Diole und ihre Umsetzung mit Diisocyanaten zu R_{F}enthaltenden Polyurethanen sind in der EP-A 1 088 929 (Komponente B) von Anspruch 1) und in der US 4 054 592 beschrieben.
Als Komponente C1) gut geeignete R_{F}-enthaltende Polyester sind bekannt und beispielsweise in der EP-A 1 088 929 beschrieben (Komponente A) von Anspruch 1). Besonders gut geeignet sind Polyester, welche sich aus den oben genannten bevorzugten R_{F}-Diolen und aliphatischen Dicarbonsäuren wie z.B. Adipinsäure erhalten lassen.
Als Komponente C1) sind auch R_{F} enthaltende Polyurethane geeignet, welche als Copolymere mit Urethan- und mit Siloxaneinheiten vorliegen. Solche Polymere sind in der EP-A 325 918 und der EP-A 467 083 beschrieben.

Komponente C2) erfindungsgemäßer Dispersionen ist ein fluorfreies Polyurethan. Hierfür sind Polyurethane geeignet, welche sich aus Diolen und Diisocyanaten nach allgemein aus der Polyurethanchemie bekannten Methoden herstellen lassen. Vorzugsweise werden Polyurethane verwendet, welche keine freien Isocyanatgruppen mehr enthalten, was sich durch die Herstellungsbedingungen steuern läßt, z.B. durch Verwendung eines gewissen Überschusses an OH-Gruppen des Diols gegenüber Isocyanatgruppen des Diisocyanats.
Gut geeignet als Komponente C2) sind Polyurethane, welche sich aus folgenden Diolen durch Umsetzung mit Diisocyanaten erhalten lassen: Ethylenglykol und dessen Homologe mit 3 bis 50 Kohlenstoffatomen wie z.B. niedermolekulare Diole oder Polyethylenglykole mit einem Molgewicht von 400 bis 800. Die Kohlenstoffketten der Diole können linear oder verzweigt sein. Es können auch Mischungen solcher Diole bei der Herstellung verwendet werden.
Für die Umsetzung mit Diolen zu Polyurethanen, welche als Komponente C2) geeignet sind, können aliphatische, cycloaliphatische oder aromatische Diisocyanate verwendet werden. Gut geeignete Beispiele sind Hexamethylen-1.6-diisocyanat, Trimethyl-hexamethylen-1.6-diisocyanat (z.B. als Isomerengemisch), 2.4-Toluylendiisocyanat, 2.6-Toluylendiisocyanat oder ein Gemisch dieser Toluylendiisocyanate.
Polyurethane der genannten Art sind auf dem Markt erhältlich.
Besonders gut als Komponente C2) geeignete Polyurethane stellen die Polyesterurethane dar. Diese enthalten neben Urethaneinheiten noch Polyestereinheiten in der Polymerkette. Sie lassen sich nach bekannten Methoden herstellen durch Umsetzung von Polyestern, welche freie OH-Gruppen an den Kettenenden aufweisen, mit Diisocyanaten. Bei dieser Umsetzung werden vorteilhaft noch Diole als Kettenverlängerer zusätzlich mitverwendet. Als Diole und Diisocyanate kommen hier wieder die oben bereits beschriebenen Verbindungen in Betracht. Die für die Synthese verwendeten Polyester mit freien OH-Endgruppen können aliphatische oder aromatische Verbindungen sein. Gut geeignet sind Polyester, welche sich durch Umsetzung von Terephthalsäure, Phthalsäure oder einer aliphatischen Dicarbonsäure, die 2 bis 6 Kohlenstoffatome enthält, mit einem Überschuß an Diol erhalten lassen. Das hierfür verwendete Diol kann wiederum von der oben beschriebenen Art sein.
Die Herstellung gut als Komponente C2) geeigneter Polyesterurethane ist beispielsweise beschrieben in der EP-A 1 055 692, EP-A 1 010 712 und EP-A 295 422.
Geeignete Polyesterurethane sind in Form wäßriger Dispersionen auf dem Markt erhältlich. Diese Dispersionen, welche außer Polyesterpolyurethanen (Komponente C2)) noch Dispergatoren enthalten, lassen sich in der Regel direkt für die Herstellung erfindungsgemäßer Dispersionen ohne vorhergehende Isolierung des Polyesterpolyurethans verwenden. Beispiele für solche Handelsprodukte sind IMPRANIL DLN Dispersion W 50 (Fa. Bayer AG) und BAYDERM Grund 10 UD (Fa. Bayer AG).

Falls gewünscht, können erfindungsgemäße Dispersionen weitere Komponenten enthalten, wie sie üblicherweise für die Behandlung textiler Flächengebilde verwendet werden. Beispiele hierfür sind Flammschutzmittel oder Cellulosevernetzer. Auch können neben Komponente B) weitere Polyorganosiloxane enthalten sein. Diese sollten im wesentlichen frei von Kohlenstoff-Kohlenstoff-Mehrfachbindungen, von Epoxidgruppen, von Polyalkylenoxidgruppen und von Si-H-Bindungen sein. In Betracht kommen hierfür Polydimethylsiloxane mit (CH₃)₃Si-O-Endgruppen oder Polydimethylsiloxane, bei denen innerhalb der Polymerkette eine oder mehrere Methylgruppen (jedoch nicht zwei Methylgruppen am gleichen Si-Atom) durch Aminogruppen enthaltende Reste ersetzt sind. Diese Reste sind bevorzugt die oben beschriebenen Reste der Formel

(̵CH₂)̵ₛ NR⁵ (̵ CH₂)̵ₜ NR⁵ ₂

Solche aminofunktionellen Polysiloxane sind aus dem Stand der Technik bekannt und können aus H-Siloxanen und ungesättigten Aminen, z.B. Allylaminen hergestellt werden. Geeignete Produkte dieser Art können von Fa. Wacker, DE, und von Fa. Dow Corning bezogen werden. Geeignete handelsübliche aminofunktionelle Polysiloxane liegen entweder bereits in Form wäßriger Dispersionen vor oder können nach allgemein bekannten Methoden in wäßrige Dispersionen überführt werden. Diese wäßrigen Dispersionen können zu erfindungsgemäßen Dispersionen hinzugefügt werden. Geeignete aminofunktionelle Polysiloxane und wäßrige Dispersionen davon sind beschrieben in US 4 247 592, EP-A 138 192 und WO 88/08436.

Vielfach ist es von Vorteil, wenn erfindungsgemäße Dispersionen, die eine Komponente C1) enthalten, zusätzlich einen Extender oder ein Gemisch von Extendern enthalten. Extender verstärken die öl-/wasserabweisenden Eigenschaften von mit Fluorpolymeren ausgerüsteten Textilien und ermöglichen somit ein gutes Effektniveau auch bei niedrigeren Einsatzmengen an den (teuren) Fluorpolymeren.
Extender und ihre Verwendung bei der Behandlung von Textilien mit Fluorpolymeren sind aus dem Stand der Technik bekannt. Insbesondere als Extender geeignet sind Verbindungen, welche reversibel blockierte Isocyanatgruppen enthalten. Diese reversibel blockierten Isocyanate bilden bei erhöhter Temperatur freie Isocyanatgruppen zurück. Als Blockierungsmittel eignen sich vor allem Ketonoxime, wie z.B. Butanonoxim.
Als Extender eigenen sich insbesondere aliphatische, cycloaliphatische und aromatische Verbindungen mit 2 oder mehr blockierten Isocyanatgruppen, z.B. Hexamethylendiisocyanat, Trimethyl-hexamethylendiisocyanat, Diphenylmethan-4,4'diisocyanat, jeweils nach Blockierung der NCO-Gruppen.
Geeignete Extender sind beschrieben in EP-A 872 503 (Anspruch 1), EP-A 537 578 (Anspruch 1) und WO 86/02115.

Als Extender können auf dem Markt erhältliche Produkte verwendet werden, nachdem die freien Isocyanatgruppen dieser Produkte blockiert worden sind, vorzugsweise durch Umsetzung mit einem Ketonoxim. Beispiele solcher Handelsprodukte sind BAYGARD EDW und DESMODUR L 75 (NCO-Gruppen enthaltende Polyurethane der Fa. Bayer, DE) sowie "Isophorondiisocyanat" (= 1-Methyl-, 1-isocyanatomethyl-, 3-isocyanato-5,5-dimethyl-cyclohexan).
Falls erfindungsgemäßen Dispersionen, welche eine Komponente C1) enthalten, zusätzlich ein Extender hinzugefügt werden soll, so erfolgt dies vorzugsweise in solchen Mengen, daß das Gewichtsverhältnis von Komponente C1) zu Extender im Bereich von 1 : 0,1 bis 1 : 1,5 liegt, insbesondere im Bereich von 1 : 0,2 bis 1 : 0,8.

Die Herstellung erfindungsgemäßer Dispersionen kann nach allgemein bekannten Methoden erfolgen. Eine Möglichkeit besteht darin, ein Gemisch aus Wasser und Komponente A) (Dispergator) vorzulegen, die übrigen Komponenten hinzuzufügen und anschließend mechanisch zu homogenisieren. Im Normalfall lassen sich bereits bei Raumtemperatur stabile Dispersionen erhalten, unter Umständen kann jedoch eine etwas erhöhte Temperatur erforderlich sein.

Erfindungsgemäße Dispersionen, welche außer Wasser die Komponenten A), B) und C1) enthalten, eignen sich insbesondere für die Applikation mittels Foulard auf textile Flächengebilde wie Gewebe oder Maschenware aus Baumwolle, Synthetics, wie Polyester oder Polyamid, oder Mischungen davon. Die so ausgerüsteten textilen Flächengebilde können zur Herstellung von Bekleidungsartikeln oder Heimtextilien dienen. Die Applikation über Foulard und die Weiterverarbeitung der ausgerüsteten Textilien können nach üblichen Verfahren erfolgen. Erfindungsgemäße Dispersionen, welche außer Wasser die Komponenten A), B) und C2) enthalten, eignen sich für die Beschichtung textiler Flächengebilde wie z.B. Gewebe aus Baumwolle, Leinen, Synthetics wie Polyester oder Polyamid oder Fasermischungen für Endartikel wie modische beschichtete Bekleidung. Hierzu werden den Dispersionen im Normalfall Verdicker hinzugefügt, wie dies für Beschichtungsverfahren üblich ist. Außerdem können bei der Herstellung der Dispersionen schaumhemmende Produkte mitverwendet werden.
Eine für die Beschichtung geeignete Rezeptur kann beispielsweise erhalten werden, indem man zu 1000 Gewichtsteilen einer wäßrigen Dispersion, welche die Komponenten A), B), C2) und Wasser enthält, 5 Gew.Teile eines Entschäumers hinzufügt, anschließend einen Verdicker in einer solchen Menge hinzufügt, daß eine hochviskose Flüssigkeit oder eine pastöse Konsistenz erreicht wird, wie sie für Beschichtungsprozesse üblicherweise verwendet wird. Als Entschäumer geeignet ist z.B. das Produkt DICRYLAN-Entschäumer D der Firma Ciba Spezialitätenchemie Pfersee GmbH, DE, eine Zusammensetzung auf Basis eines Kohlenwasserstoffgemischs. Auch silikonhaltige Entschäumungsmittel können verwendet werden.

Als Verdicker geeignet sind Produkte auf Polyacrylatbasis wie DICRYLAN-Verdicker TFC oder DICRYLAN-Verdicker R (Ciba Spezialitätenchemie Pfersee GmbH, DE). Im Fall der Verwendung von DICRYLAN-Verdicker R sollte der pH-Wert z.B. mittels Ammoniak, auf einen schwach basischen Wert eingestellt werden. Die Beschichtung und Weiterverarbeitung kann nach üblichen Verfahren durchgeführt werden.

Die Erfindung wird nachstehend durch Ausführungsbeispiele veranschaulicht.

### Beispiel 1

### Herstellung einer Komponente B) (Polyorganosiloxan)

In einem Dreihalskolben wurden 60 g H-Siloxan (Struktur s. unten), 100 g 1-Dodecen und 8 g α-Methylstyrol vorgelegt. Unter Rühren und Zuleiten von N₂ wurde 1 ml einer Mischung aus 37 g 1-Dodecen und 0,5 g Katalysator zugegeben. Dabei stieg die Temperatur des Gemischs von Raumtemperatur auf etwa 120°C an. Dann wurde bei 80°C der Rest der Mischung aus 1-Dodecen und Katalysator zugegeben. Die Dauer der Zugabe der Gesamtmenge dieser Mischung betrug ca. 70 Minuten. Anschließend wurde das Produktgemisch noch ca. 260 Minuten bei 80°C gerührt.
Man erhielt eine leicht gelb gefärbte Flüssigkeit einer Viskosität von etwa 1100 mPas (bei 25°C). Das darin enthaltene Polyorganosiloxan wies an beiden Kettenenden Einheiten der Formel (CH₃)₃Si-O- auf und enthielt in der Kette Einheiten der Formel -Si(CH₃) (-C₁₂H₂₅)-O- und Einheiten der Formel -Si(CH₃) (-CH₂-CH(CH₃)-C₆H₅)-O-.
Der oben genannte Katalysator war eine Lösung eines Platin(0)-Komplexes von 1,3-Divinyl-1,1,3,3 Tetramethyldisiloxan in Isopropanol. Diese Lösung enthielt ca. 1 % Pt.
Das H-Siloxan (Fa. Wacker, DE) besaß folgende Struktur

(CH₃)₃Si-O-[Si(H)(CH₃)-O-]ₓ Si (CH₃)₃

wobei x einen Wert von etwa 40 besaß.

### Beispiel 2

### Herstellung einer wäßrigen Dispersion einer Komponente B)

175 g des gemäß Beispiel 1 erhaltenen Produkts wurden in eine Mischung von 20 g Wasser und 15 g eines ethoxilierten C₁₀/C₁₄-Alkohols (ca. 6 Polyoxyethyleneinheiten) gegeben. Das Gemisch wurde bei Raumtemperatur unter kräftigem Rühren homogenisiert, dann wurden 290 g Wasser und 0,5 g eines Bakterizids hinzugefügt. Man erhielt eine stabile opale wäßrige Dispersion (= "Dispersion 1").

### Beispiel 3

### Herstellung einer wäßrigen Dispersion einer Komponente B) und eines aminofunktionellen Polysiloxans

18 g eines aminofunktionellen Polysiloxans (Q2-8630, Dow Corning) und 157 g des gemäß Beispiel 1 erhaltenen Reaktionsprodukts wurden zu einer Lösung von 15 g ethoxiliertem C₁₀/C₁₄-Alkohol (siehe Beispiel 2) in 20 g Wasser gegeben und das erhaltene Gemisch unter kräftigem Rühren bei Raumtemperatur homogenisiert. Anschließend wurde 2,5 g einer 60 %igen Lösung von Essigsäure in Wasser hinzugefügt, dann 290 g Wasser und 0,5 g eines Bakterizids. Nach erneuter Homogenisierung wurde eine stabile, opale wäßrige Dispersion erhalten (= "Dispersion 2").

### Beispiel 4 (nicht-erfindungsgemäßes Vergleichsbeispiel)

Bei diesem Beispiel wurde versucht, eine stabile wäßrige Dispersion eines Polysiloxans zu erhalten, das in Seitenketten längere Alkylreste, aber keine aromatischen Gruppen enthielt.
Hierzu wurden 45 g H-Siloxan (siehe Beispiel 1) innerhalb 70 Minuten zu einer Mischung hinzugefügt, welche 111 g 1-Dodecen und 0,6 g Katalysator auf Basis eines Platinkomplexes von Divinylsiloxan enthielt. Die Mischung wurde anschließend 2,5 Stunden unter N₂ bei 80°C gerührt. Man erhielt eine gelbliche Flüssigkeit einer Viskosität von etwa 700 mPa.s (bei 25°C). 126 g des so erhaltenen Produktgemischs wurden in eine Lösung von 11 g ethoxiliertem Alkohol (siehe Beispiel 2) in 15 g Wasser eingerührt. Anschließend wurden 208 g Wasser und 0,4 g Bakterizid hinzugefügt. Es konnte auch nach längerem intensivem Rühren keine stabile Dispersion erhalten werden.

### Beispiel 5

### Herstellung einer erfindungsgemäßen wäßrigen Dispersion

0,5 g eines ethoxilierten Alkohols (Alkylkette durchschnittlich 13 C-Atome und 20 Polyoxyethyleneinheiten) wurden in 4 g Wasser unter Rühren gelöst und die Mischung auf 60°C erwärmt.

Anschließend wurden 1,5 g des in Beispiel 2 beschriebenen ethoxilierten Alkohols zugegeben und die Mischung bei 60°C gerührt, bis eine klare Lösung entstanden war. Diese Lösung wurde auf 30°C gekühlt, dann 48 g einer wäßrigen Polyurethandispersion und 48 g der gemäß Beispiel 2 erhaltenen Dispersion 1 unter Rühren hinzugefügt. Man erhielt eine auch nach 30-tägiger Lagerung bei 40°C oder bei Raumtemperatur sehr stabile milchige Dispersion, die sich nach Zugabe eines Verdickers ausgezeichnet zur Beschichtung textiler Fasermaterialien eignete.
Die verwendete wäßrige Polyurethandispersion war das Produkt DICRYLAN PSC (Ciba Spezialitätenchemie Pfersee GmbH, DE) und enthielt 70 % Wasser und 30 % eines Polyesterurethans auf Basis eines aliphatischen Diisocyanats und eines Polyesters auf Basis eines Gemischs aus einer aromatischen und einer aliphatischen Dicarbonsäure und eines aliphatischen Diols, wobei der Polyester noch freie OH-Gruppen enthielt.
Als Verdicker für die Herstellung einer Beschichtungsrezeptur sind die oben in der Beschreibung genannten Polymere auf Acrylatbasis geeignet.

### Beispiel 6

### Herstellung einer erfindungsgemäßen Dispersion

Die nachfolgend beschriebenen Produkte a) bis e) wurden bei Raumtemperatur miteinander vermischt und das Gemisch durch Rühren homogenisiert.
a) 107 g einer wäßrigen, beigefarbenen Dispersion mit 16 Gew% eines Acryl-Copolymeren, das R_{F}-Gruppen enthielt, 3 Gew% eines aliphatischen Diols mit 6 C-Atomen, 1,5 Gew% Polyethylenglykolmonostearat und 80 Gew% Wasser.
b) 107 g einer wäßrigen Dispersion mit 14 Gew% eines Polyurethans, das R_{F}-Gruppen enthielt, 7 Gew% eines mittels Butanonoxim blockierten Polyisocyanats, 1,5 Gew% eines ethoxilierten Isotridecylalkohols mit durchschnittlich 10 EO-Einheiten, 0,7 Gew% Polyoxyethylenstearylmethylammoniumchlorid, 3 Gew% 1,2-Propandiol, 0,1 Gew% HCI, Rest Wasser. Das hierfür verwendete Polyurethan mit R_{F}-Gruppen war ein Produkt, das durch Umsetzung von

   (R_{F}-CH₂CH₂-S-CH₂)₂ C(CH₂OH)₂

   mit Trimethyl-hexamethylendiisocyanat (Isomerengemisch) erhalten wurde. Die Reste R_{F} entsprachen der Formel 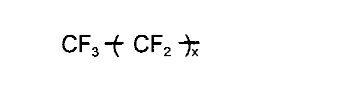 wobei x durchschnittlich im Bereich von 7 bis 11 lag.
   Das mittels Butanonoxim blockierte Polyisocyanat war auf Basis von

   R(C₇H₁₅) (-C₉H₁₈-NCO)₂ (C₅H₁₁)

   hergestellt, wobei R der vierwertige Rest ist, der aus Cyclohexan durch Entfernung von 4 H-Atomen entsteht.
c) 12 g Dispersion 1 gemäß Beispiel 2
d) 12 g Isobutylether eines Umsetzungsprodukts aus Talgfettamin, Harnstoff und Formaldehyd
e) 12 g Wasser

Es wurde eine stabile wäßrige Dispersion erhalten (= "Dispersion 3")

### Beispiel 7

Beispiel 6 wurde wiederholt, wobei als Produkt c) nicht die Dispersion 1 verwendet wurde, sondern 12 g der Dispersion 2 gemäß Beispiel 3. Es wurde eine stabile Dispersion erhalten (= "Dispersion 4")

### Beispiel 8

Die nachfolgend beschriebenen Produkte f) bis j) wurden bei Raumtemperatur gemischt und das Gemisch durch Rühren homogenisiert.
f) 80 g Produkt a) von Beispiel 6
g) 80 g einer wäßrigen Dispersion mit 15 Gew% eines R_{F}-Gruppen enthaltenden Acrylpolymeren, 2 Gew% Polyoxyethylenglykolmonostearat, 8 Gew% Aceton, 5 Gew% eines aliphatischen Diols mit 6 C-Atomen und 70 Gew% Wasser
h) 15 g Dispersion 1 gemäß Beispiel 2
i) 15g Produkt d) von Beispiel 6
j) 10 g Wasser

Es resultierte wiederum eine stabile wäßrige Dispersion (= "Dispersion 5")

### Beispiel 9

Beispiel 8 wurde wiederholt, mit dem Unterschied, daß als Produkt h) nicht Dispersion 1, sondern 15 g Dispersion 2 gemäß Beispiel 3 verwendet wurden. Das Ergebnis war eine stabile Dispersion (= "Dispersion 6").

### Beispiel 10

### Ausrüstversuche auf Geweben aus 100 % Baumwolle und auf Polyester/Baumwolle-Mischgeweben

Die Dispersionen 3 und 4 gemäß Beispielen 6 und 7 wurden mittels Foulard-Verfahren auf Gewebe aus 100 % Baumwolle und auf Gewebe aus Baumwolle/Polyester-Mischung (40:60) aufgebracht. Als Flottenkonzentrationen wurden 10 g/l, 20 g/l und 40 g/l eingesetzt. Nach der Applikation der Flotten wurden die Gewebe abgequetscht (auf ca. 80 % Flottenaufnahme) getrocknet (10 min./110°C) und kondensiert (5 min./150°C).
Als Vergleich diente jeweils ein Gewebe, auf das eine Dispersion appliziert wurde, welche der Dispersion 3 von Beispiel 6 entsprach, jedoch mit dem Unterschied, daß das Produkt c) (= Dispersion 1) nicht hinzugefügt worden war. Stattdessen wurden dieser Vergleichsdispersion 12 g einer wäßrigen Dispersion hinzugefügt, welche 35 Gew% eines Polyorganosiloxans und 3 Gew% Dispergator (C₁₀/C₁₄-Alkohol ethoxiliert, ca. 6 EO-Einheiten) enthielt. Das verwendete Polyorganosiloxan enthält Si-H-Bindungen und Epoxygruppen neben Alkylgruppen und aromatischen Gruppen in Seitenketten.

Prüfungen an den Geweben ergaben im Fall von 100 % Baumwolle, daß die erfindungsgemäßen Dispersionen zu etwa gleichen Werten bezüglich Ölabweisung führten, als im Fall der Vergleichsgewebe, jedoch zu deutlich besseren Werten bezüglich Wasserabweisung (Bundesmann-Test). Im Fall von Mischgewebe waren die entsprechenden Ergebnisse etwas besser.

## Patentansprüche

1. Zusammensetzung, welche folgende Komponenten enthält
A) einen Dispergator oder ein Gemisch von Dispergatoren
B) ein unverzweigtes Polyorganosiloxan, welches keine Epoxygruppen und keine olefinischen Kohlenstoff-Kohlenstoff-Doppelbindungen und keine Kohlenstoff-Kohlenstoff-Dreifachbindungen enthält, wobei beide Endgruppen der Polysiloxankette durch Einheiten der Formel
R₃Si-O-
gebildet werden und wobei das Polysiloxan innerhalb der Kette Einheiten der Formeln (I), (II) und gegebenenfalls der Formel (III) enthält
-SiRR¹-O- (I)
-SiRR²-O- (II)
-SiR₂-O- (III)
wobei die Einheiten der Formeln (I) bis (III) beliebig über die Kette verteilt sein können, wobei
alle Reste R unabhängig voneinander für einen unverzweigten oder verzweigten Alkylrest mit 1 bis 4 Kohlenstoffatomen stehen,
alle Reste R¹ unabhängig voneinander für einen unverzweigten oder verzweigten Alkylrest mit 6 bis 24 Kohlenstoffatomen stehen,
alle Reste R² unabhängig voneinander für einen Rest der Formel (IV) stehen
-R³-Ph, (IV)
wobei R³ für einen zweiwertigen unverzweigten oder verzweigten Alkylenrest mit 2 bis 6 Kohlenstoffatomen steht und Ph für einen unsubstituierten Phenylrest steht oder für einen Phenylrest, der eine oder mehrere unverzweigte oder verzweigte Alkylgruppen mit 1 bis 4 Kohlenstoffatomen als Substituenten aufweist,
C) ein Polymer, das ausgewählt ist aus Polymeren, welche Perfluoralkylgruppen (R_{F}) aufweisen (Komponente C1) und fluorfreien Polyurethanen (Komponente C2)

2. Zusammensetzung nach Anspruch 1, **dadurch gekennzeichnet, daß** in Komponente B) alle Reste R Methylgruppen sind.

3. Zusammensetzung nach Anspruch 1 oder 2, **dadurch gekennzeichnet, daß** in Komponente B) alle Reste R¹ unabhängig voneinander für einen unverzweigten Alkylrest mit 10 bis 18 Kohlenstoffatomen stehen.

4. Zusammensetzung nach einem oder mehreren der Ansprüche 1 bis 3, **dadurch gekennzeichnet, daß** in Komponente B) alle Reste R² für
-CH₂-CHR⁴-Ph
stehen, wobei R⁴ für Wasserstoff oder eine Methylgruppe und Ph für den unsubstituierten Phenylrest steht.

5. Zusammensetzung nach einem oder mehreren der Ansprüche 1 bis 4, **dadurch gekennzeichnet, daß** in Komponente B) die Anzahl der Einheiten der Formel (II) 4 bis 30 % der Anzahl der Einheiten der Formel (I) und die Anzahl der Einheiten der Formel (III) 0 bis 5000 %, vorzugsweise 0 bis 1000 %, der Anzahl der Einheiten der Formel (I) beträgt.

6. Zusammensetzung nach einem oder mehreren der Ansprüche 1 bis 5, **dadurch gekennzeichnet, daß** Komponente B) 20 bis 1000, vorzugsweise 20 bis 100, Siliciumatome enthält.

7. Zusammensetzung nach einem oder mehreren der Ansprüche 1 bis 6, **dadurch gekennzeichnet, daß** sie 0,5 bis 10 Gew% Komponente A), 0,5 bis 30 Gew% Komponente B), 3 bis 30 Gew% Komponente C) und 30 bis 96 Gew% Wasser enthält.

8. Zusammensetzung nach einem oder mehreren der Ansprüche 1 bis 7, **dadurch gekennzeichnet, daß** Komponente A) ausschließlich aus nichtionischen Verbindungen besteht.

9. Zusammensetzung nach einem oder mehreren der Ansprüche 1 bis 8, **dadurch gekennzeichnet, daß** sie als Komponente C) entweder nur eine oder mehrere Komponenten C1) oder nur eine oder mehrere Komponenten C2) enthält.

10. Zusammensetzung nach einem oder mehreren der Ansprüche 1 bis 9, **dadurch gekennzeichnet, daß** Komponente C1) ein Polyester, Polyurethan oder ein Polyacrylat ist, das R_{F}-Gruppen enthält.

11. Zusammensetzung nach einem oder mehreren der Ansprüche 1 bis 9, **dadurch gekennzeichnet, daß** Komponente C2) ein Polyesterurethan ist.

12. Zusammensetzung nach einem oder mehreren der Ansprüche 1 bis 11, **dadurch gekennzeichnet, daß** sie eine wäßrige Dispersion ist.

13. Verwendung einer Dispersion nach Anspruch 12 für die Behandlung von Fasermaterialien.

14. Verwendung nach Anspruch 13, **dadurch gekennzeichnet, daß** die Fasermaterialien textile Flächengebilde in Form von Geweben oder von Maschenware sind.
